# FASCICULE DE BREVET EUROPEEN

(11) **EP 3 455 103 B1**
(45) Date de publication et mention de la délivrance du brevet: **18.03.2020**
(21) Numéro de dépôt: 17727293.7
(22) Date de dépôt: 11.05.2017
(51) Int. Cl.: B60R 5/04, B65D 21/02

(54) **SYSTÈME DE COMPARTIMENTAGE D'UN COMPARTIMENT À BAGAGES DE VÉHICULE AUTOMOBILE**
SYSTEM ZUR UNTERGLIEDERUNG EINES KOFFERRAUMS EINES KRAFTFAHRZEUGS
SYSTEM FOR SUBDIVIDING A LUGGAGE COMPARTMENT OF A MOTOR VEHICLE

(30) Priorité: 13.05.2016 FR 1654331
(43) Date de publication de la demande: 20.03.2019
(73) Titulaire: TREVES Products, Services & Innovation, 75008 Paris (FR)
(72) Inventeur: PHILIPPE, Benoît, 17246 Girona (ES); MIDDEL, Richard, 17300 Blanes (ES)
(74) Mandataire: Sayettat, Julien Christian
(86) Numéro de dépôt international: PCT/FR2017/051125
(87) Numéro de publication internationale: WO 2017/194883

(56) Documents cités:
- CN-A- 101 767 552
- JP-A- 2002 326 544
- JP-A- 2008 074 308
- US-B2- 7 794 004

## Description

L'invention concerne un système de compartimentage d'un compartiment à bagages de véhicule automobile.

Il est connu, notamment du document US-7 794 004, de réaliser un système de compartimentage d'un compartiment à bagages de véhicule automobile, selon le préambule de la revendication 1, ledit système comprenant :
- une paroi de sol dudit compartiment,
- deux parois latérales de garnissage dudit compartiment,
- deux bacs de rangement en matériau plastique moulé, lesdits bacs présentant une configuration de recouvrement de ladite paroi où ils sont disposés bord à bord selon deux bords transversaux respectifs, de manière à définir un bac avant et un bac arrière, lesdits bords présentant une dimension analogue à l'écart entre lesdites parois latérales,
- deux couvercles de fermeture de chacun desdits bacs, lesdits couvercles en configuration de fermeture étant dans la continuité l'un de l'autre de manière à définir une face de réception de bagages.

L'agencement décrit dans ce document présente une certaine complexité de réalisation, chacun des bacs étant spécifique.

En outre, les bacs sont disposés à demeure dans le compartiment à bagages, ce qui peut empêcher le chargement d'objets de grandes dimensions dans ledit compartiment.

L'invention a pour but de pallier ces inconvénients.

A cet effet, l'invention propose un système de compartimentage d'un compartiment à bagages de véhicule automobile, ledit système comprenant :
- une paroi de sol dudit compartiment,
- deux parois latérales de garnissage dudit compartiment,
- deux bacs de rangement en matériau plastique moulé, lesdits bacs présentant une configuration de recouvrement de ladite paroi où ils sont disposés bord à bord selon deux bords transversaux respectifs, de manière à définir un bac avant et un bac arrière, lesdits bords présentant une dimension analogue à l'écart entre lesdites parois latérales,
- deux couvercles de fermeture de chacun desdits bacs, lesdits couvercles en configuration de fermeture étant dans la continuité l'un de l'autre de manière à définir une face de réception de bagages,
lesdits bacs étant :
- identiques, de manière à pouvoir être réalisés dans un même moule,
- amovibles, de manière à pouvoir être mis dans une autre configuration que ladite configuration de recouvrement,
- et pourvus de moyens d'emboitement, disposés selon un bord transversal, et de moyens d'emboitement réciproques, disposés selon l'autre bord transversal, lesdits moyens étant issus de moulage, lesdits moyens étant agencés pour permettre de réaliser une liaison entre lesdits bacs quand ils sont mis dans ladite configuration de recouvrement.

Dans cette description, les termes de positionnement dans l'espace (transversal, latéral, avant, arrière, vertical,...) sont pris en référence au système en place dans le véhicule.

Avec l'agencement proposé :
- la réalisation du système est simplifiée puisque les bacs sont identiques, donc pouvant être réalisés dans un même moule,
- les bacs étant amovibles, on peut les retirer ou les mettre dans une autre configuration que la configuration de recouvrement, ce qui permet de gagner de la place et/ou de compartimenter différemment le compartiment, comme on le verra plus loin,
- la liaison par emboitement entre les bacs, quand ils sont mis dans la configuration de recouvrement, permet d'assurer une bonne tenue mécanique d'ensemble et de limiter l'apparition de bruits parasites issus de vibrations.

D'autres particularités et avantages de l'invention apparaîtront dans la description qui suit, faite en référence aux figures jointes, dans lesquelles :

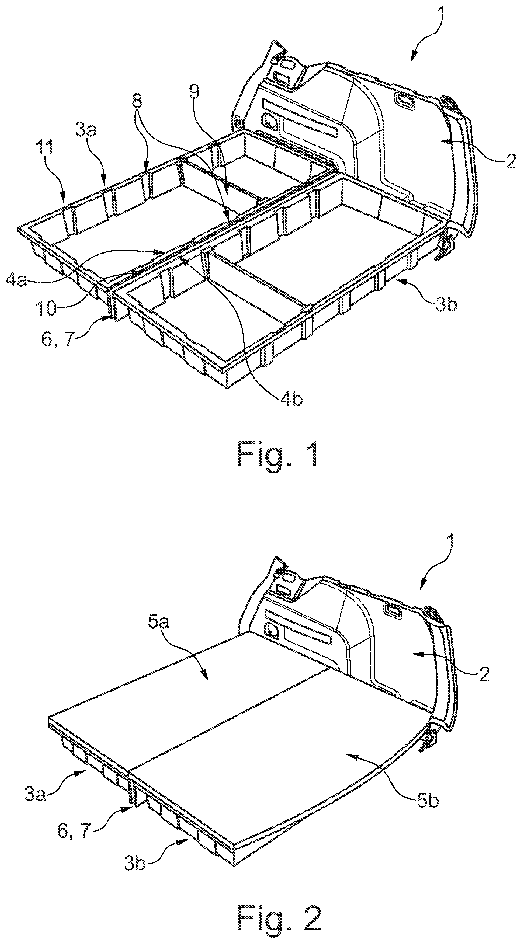

- la figure 1 est une vue schématique partielle en perspective d'un système selon une réalisation, les bacs étant en configuration de recouvrement et non pourvus de leurs couvercles,
- la figure 2 est analogue à la figure 1, les bacs étant recouverts par leurs couvercles,
- la figure 3 est une vue analogue aux figures précédentes, les couvercles étant insérés dans des rainures pour permettre un accès à leur volume intérieur et/ou compartimenter le compartiment à bagages,
- la figure 4 est une vue analogue aux figures précédentes, les bacs étant emboités l'un dans l'autre et étant dépourvus de leurs couvercles,

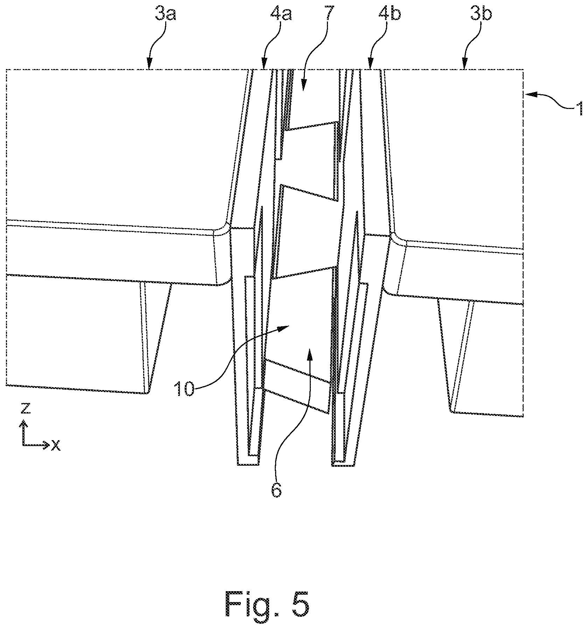

- la figure 5 est une vue en perspective de détail du système des figures précédentes.

En référence aux figures, on décrit un système 1 de compartimentage d'un compartiment à bagages de véhicule automobile, ledit système comprenant :
- une paroi de sol - non représentée et notamment en tôle - dudit compartiment,
- deux parois latérales 2 de garnissage dudit compartiment, une seule desdites parois étant représentée,
- deux bacs de rangement 3a,3b en matériau plastique moulé, lesdits bacs présentant une configuration de recouvrement de ladite paroi où ils sont disposés bord à bord selon deux bords transversaux 4a,4b respectifs, de manière à définir un bac avant 3a et un bac arrière 3b, lesdits bords présentant une dimension analogue à l'écart entre lesdites parois latérales,
- deux couvercles 5a,5b de fermeture de chacun desdits bacs, lesdits couvercles en configuration de fermeture étant dans la continuité l'un de l'autre de manière à définir une face de réception de bagages,
lesdits bacs étant :
- identiques, de manière à pouvoir être réalisés dans un même moule,
- amovibles, de manière à pouvoir être mis dans une autre configuration que ladite configuration de recouvrement,
- et pourvus de moyens d'emboitement 6, disposés selon un bord transversal 4a, et de moyens d'emboitement réciproques 7, disposés selon l'autre bord transversal 4b, lesdits moyens étant issus de moulage, lesdits moyens étant agencés pour permettre de réaliser une liaison entre lesdits bacs quand ils sont mis dans ladite configuration de recouvrement.

Selon la réalisation représentée, les moyens d'emboitement 6 et d'emboitement réciproque 7 sont de type tenon/mortaise et agencés pour permettre leur déboitement selon la verticale.

Selon la réalisation représentée, les bacs 3a,3b sont pourvus de moyens de réception 8 d'une plaque 9 de compartimentage de leur volume intérieur, lesdits moyens étant agencés de manière à permettre un montage de ladite plaque selon une - de façon non représentée - ou plusieurs - selon la réalisation représentée - positions.

Selon la réalisation représentée, les moyens de réception 8 sont sous forme de rainures d'insertion en coulissement des extrémités de la plaque 9.

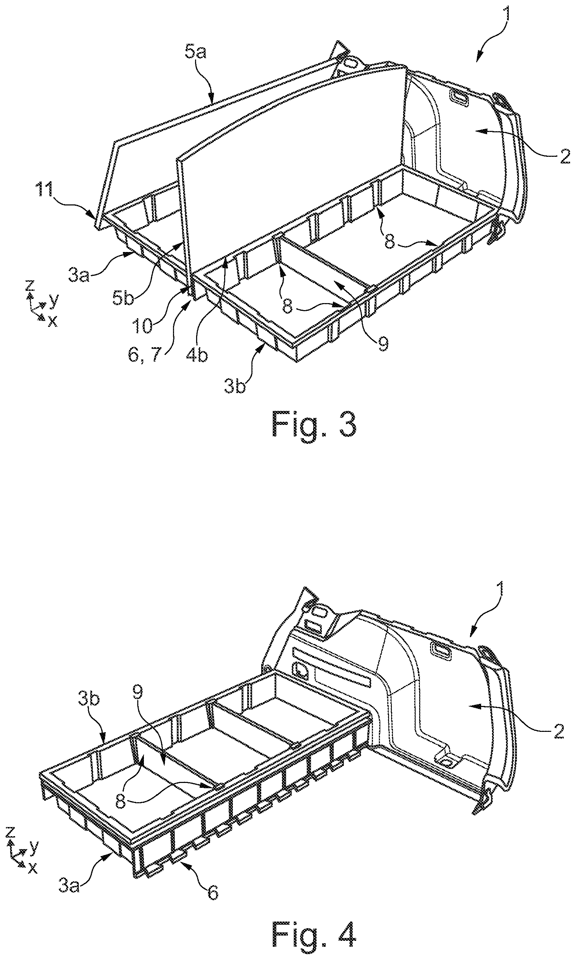

Selon la réalisation représentée, comme illustré en figure 4, les bacs 3a,3b sont emboitables l'un dans l'autre, de sorte que l'ensemble desdits bacs emboités l'un dans l'autre présente sensiblement le même encombrement qu'un desdits bacs seul.

Un tel agencement permet une libération d'espace maximale en hauteur, en arrière du compartiment, quand les bacs 3a,3b une fois emboités l'un dans l'autre sont disposés à l'avant dudit compartiment, comme représenté en figure 4.

Selon la réalisation représentée, comme illustré en figure 3, lorsque les bacs 3a,3b sont mis en configuration de recouvrement, un premier espace 10 sous forme de rainure est ménagée entre lesdits bacs de manière à pouvoir recevoir en emboitement une bordure de couvercle 5b pour réaliser un compartimentage vertical du compartiment à bagages par ledit couvercle.

Selon la réalisation représentée, comme illustré en figure 3, le système 1 comprend en outre une paroi avant du compartiment à bagages définie par les faces d'envers, non représentées, des dossiers de siège arrière du véhicule, un deuxième espace 11 sous forme de rainure étant ménagée, lorsque les bacs 3a,3b sont mis en configuration de recouvrement, entre le bac avant 3a et ladite paroi de manière à pouvoir recevoir en emboitement une bordure de couvercle 5a se mettant sensiblement contre ladite paroi pour dégager un espace maximal de chargement dans ledit compartiment.

## Revendications

1. Système (1) de compartimentage d'un compartiment à bagages de véhicule automobile, ledit système comprenant :
• une paroi de sol dudit compartiment,
• deux parois latérales (2) de garnissage dudit compartiment,
• deux bacs de rangement (3a,3b) en matériau plastique moulé, lesdits bacs présentant une configuration de recouvrement de ladite paroi où ils sont disposés bord à bord selon deux bords transversaux (4a,4b) respectifs, de manière à définir un bac avant (3a) et un bac arrière (3b), lesdits bords présentant une dimension analogue à l'écart entre lesdites parois latérales,
• deux couvercles (5a,5b) de fermeture de chacun desdits bacs, lesdits couvercles en configuration de fermeture étant dans la continuité l'un de l'autre de manière à définir une face de réception de bagages,
ledit système étant **caractérisé en ce que** lesdits bacs sont :
• identiques, de manière à pouvoir être réalisés dans un même moule,
• amovibles, de manière à pouvoir être mis dans une autre configuration que ladite configuration de recouvrement,
• et pourvus de moyens d'emboitement (6), disposés selon un bord transversal (4a), et de moyens d'emboitement réciproques (7), disposés selon l'autre bord transversal (4b), lesdits moyens étant issus de moulage, lesdits moyens étant agencés pour permettre de réaliser une liaison entre lesdits bacs quand ils sont mis dans ladite configuration de recouvrement.

2. Système selon la revendication 1, **caractérisé en ce que** les moyens d'emboitement (6) et d'emboitement réciproque (7) sont de type tenon/mortaise et agencés pour permettre un déboitement selon la verticale.

3. Système selon l'une des revendications 1 ou 2, **caractérisé en ce que** les bacs (3a,3b) sont pourvus de moyens de réception (8) d'une plaque (9) de compartimentage de leur volume intérieur, lesdits moyens étant agencés de manière à permettre un montage de ladite plaque selon une ou plusieurs positions.

4. Système selon la revendication 3, **caractérisé en ce que** les moyens de réception (8) sont sous forme de rainures d'insertion en coulissement des extrémités de la plaque (9).

5. Système selon l'une quelconque des revendications 1 à 4, **caractérisé en ce que** les bacs (3a,3b) sont emboitables l'un dans l'autre, de sorte que l'ensemble desdits bacs emboités l'un dans l'autre présente sensiblement le même encombrement qu'un desdits bacs seul.

6. Système selon l'une quelconque des revendications 1 à 5, **caractérisé en ce que**, lorsque les bacs (3a,3b) sont mis en configuration de recouvrement, un premier espace (10) sous forme de rainure est ménagée entre lesdits bacs de manière à pouvoir recevoir en emboitement une bordure de couvercle (5b) pour réaliser un compartimentage vertical du compartiment à bagages par ledit couvercle.

7. Système selon l'une quelconque des revendications 1 à 6, **caractérisé en ce qu'**il comprend en outre une paroi avant du compartiment à bagages définie par les faces d'envers des dossiers de siège arrière du véhicule, un deuxième espace (11) sous forme de rainure étant ménagée, lorsque les bacs (3a,3b) sont mis en configuration de recouvrement, entre le bac avant (3a) et ladite paroi de manière à pouvoir recevoir en emboitement une bordure de couvercle (5a) se mettant sensiblement contre ladite paroi pour dégager un espace maximal de chargement dans ledit compartiment.

## Patentansprüche

1. System (1) zur Untergliederung eines Gepäckraumes eines Kraftfahrzeugs, wobei das System Folgendes umfasst:
• eine Bodenwand des Raumes,
• zwei Seitenwände (2) zur Auskleidung des Raumes,
• zwei Ablagefächer (3a, 3b) aus geformtem Kunststoffmaterial, wobei die Fächer eine Überdeckungskonfiguration der Wand aufweisen, wo sie Rand an Rand entlang zweier jeweiliger Querränder (4a, 4b) angeordnet sind, um ein vorderes Fach (3a) und ein hinteres Fach (3b) zu definieren, wobei die Ränder eine Abmessung entsprechend dem Abstand zwischen den Seitenwänden aufweisen,
• zwei Deckel (5a, 5b) zum Verschließen jedes der Fächer, wobei die Deckel in Verschließkonfiguration in der Fortführung zueinander sind, um eine Gepäckaufnahmefläche zu definieren,
wobei das System **dadurch gekennzeichnet ist, dass** die Fächer wie folgt sind:
• identisch, um in einer selben Form hergestellt werden zu können,
• abnehmbar, um in eine andere Konfiguration als die Überdeckungskonfiguration gebracht werden zu können,
• und mit Verschachtelungsmitteln (6) versehen, die entlang eines Querrandes (4a) angeordnet sind, und mit gegenseitigen Verschachtelungsmitteln (7), die entlang des anderen Querrandes (4b) angeordnet sind, wobei die Mittel aus einer Formung stammen, wobei die Mittel eingerichtet sind, um es zu ermöglichen, eine Verbindung zwischen den Fächern herzustellen, wenn sie in die Überdeckungskonfiguration gebracht werden.

2. System nach Anspruch 1, **dadurch gekennzeichnet, dass** die Verschachtelungsmittel (6) und gegenseitigen Verschachtelungsmittel (7) in der Art Nut/Feder sind, und angeordnet sind, um ein Lösen entlang der Vertikalen zu ermöglichen.

3. System nach einem der Ansprüche 1 oder 2, **dadurch gekennzeichnet, dass** die Fächer (3a, 3b) mit Aufnahmemitteln (8) einer Platte (9) zur Untergliederung ihres Innenvolumens versehen sind, wobei die Mittel eingerichtet sind, um eine Montage der Platte in einer oder mehreren Positionen zu erlauben.

4. System nach Anspruch 3, **dadurch gekennzeichnet, dass** die Aufnahmemittel (8) in Form von Kerben zum gleitenden Einführen der Enden der Platte (9) sind.

5. System nach einem der Ansprüche 1 bis 4, **dadurch gekennzeichnet, dass** die Fächer (3a, 3b) ineinander verschachtelbar sind, sodass die Gesamtheit der ineinander verschachtelten Fächer im Wesentlichen denselben Platzbedarf wie eines der Fächer alleine aufweist.

6. System nach einem der Ansprüche 1 bis 5, **dadurch gekennzeichnet, dass**, wenn die Fächer (3a, 3b) in Überdeckungskonfiguration sind, ein erster Zwischenraum (10) in Kerbenform zwischen den Fächern vorgesehen ist, um einen Deckelrand (5b) eingesteckt aufnehmen zu können, um eine vertikale Untergliederung des Gepäckraumes durch den Deckel zu realisieren.

7. System nach einem der Ansprüche 1 bis 6, **dadurch gekennzeichnet, dass** es weiter eine Vorderwand des Gepäckraumes umfasst, die durch die Kehrseiten der Rücksitzlehnen des Fahrzeugs definiert ist, wobei ein zweiter Zwischenraum (11) in Form einer Kerbe, wenn die Fächer (3a, 3b) in Überdeckungskonfiguration gebracht werden, zwischen dem vorderen Fach (3a) und der Wand vorgesehen ist, um einen Deckelrand (5a) eingesteckt aufnehmen zu können, der sich im Wesentlichen an die Wand anlegt, um einen maximalen Ladezwischenraum in dem Raum freizugeben.

## Claims

1. System (1) for subdividing a luggage compartment of a motor vehicle, said system comprising:
• a floor wall of said compartment,
• two side walls (2) for lining said compartment,
• two storage trays (3a, 3b) made of moulded plastic material, said trays having a configuration for covering said wall where they are disposed edge-to-edge along two respective transversal edges (4a, 4b), so as to define a front tray (3a) and a rear tray (3b), said edges having a dimension equivalent to the spacing between said side walls,
• two lids (5a, 5b) for closing each of said trays, said lids in the closing configuration following on from one another so as to define a surface for receiving luggage,
said system being **characterised in that** said trays are:
• identical, so as to be able to be produced in the same mould,
• removable, so as to be able to be placed in another configuration than said covering configuration,
• and provided with interlocking means (6), disposed along a transversal edge (4a), and reciprocal interlocking means (7), disposed along the other transversal edge (4b), said means being obtained from moulding, said means being arranged to make it possible to make a link between said trays when they are placed in said covering configuration.

2. System according to claim 1, **characterised in that** the interlocking means (6) and reciprocal interlocking means (7) are of the tenon/mortice type and arranged to enable uncoupling along the vertical.

3. System according to one of claims 1 or 2, **characterised in that** the trays (3a, 3b) are provided with means (8) for receiving a plate (9) for subdividing the inner volume thereof, said means being arranged so as to enable mounting of said plate according to one or a plurality of positions.

4. System according to claim 3, **characterised in that** the receiving means (8) are in the form of grooves for slidably inserting the ends of the plate (9).

5. System according to any one of claims 1 to 4, **characterised in that** the trays (3a, 3b) are nestable in one another, such that the assembly of said trays nested in one another has substantially the same overall dimensions as one of said trays alone.

6. System according to any one of claims 1 to 5, **characterised in that**, when the trays (3a, 3b) are placed in the covering configuration, a first space (10) in the form of a groove is provided between said trays so as to be able to receive by nesting an edge of a lid (5b) to create a vertical subdivision of the luggage compartment by said lid.

7. System according to any one of claims 1 to 6, **characterised in that** it further comprises a front wall of the luggage compartment defined by the rear surfaces of the vehicle backseat backrests, a second space (11) in groove form being provided, when the trays (3a, 3b) are placed in the covering configuration, between the front tray (3a) and said wall so as to be able to receive by nesting an edge of a lid (5a) placed substantially against said wall to free maximum loading space in said compartment.
